# EUROPÄISCHE PATENTSCHRIFT

(11) **EP 2 366 895 B1**
(45) Veröffentlichungstag und Bekanntmachung des Hinweises auf die Patenterteilung: **23.04.2014**
(21) Anmeldenummer: 11001715.9
(22) Anmeldetag: 02.03.2011
(51) Int. Cl.: F03D 7/02, F03D 1/00

(54) **Verfahren zur Bestimmung eines Wartungsazimutwinkels einer Windenergieanlage**
Method of determining the azimuth angle during maintenance of a wind turbine
Procédé de détermination d'un angle d'azimut pendant une activité de maintenance d'éolienne

(30) Priorität: 15.03.2010 DE 102010011549
(43) Veröffentlichungstag der Anmeldung: 21.09.2011
(73) Patentinhaber: Senvion SE, 22297 Hamburg (DE)
(72) Erfinder: Von Mutius, Martin, 24358 Ascheffel (DE); Steudel, Dirk, 24116 Kiel (DE)
(74) Vertreter: Groth, Wieland

(56) Entgegenhaltungen:
- EP-A2- 2 058 513
- WO-A2-2008/145126
- DE-C1- 19 717 059
- US-A1- 2005 175 451

## Beschreibung

Die Erfindung betrifft ein Verfahren zur Bestimmung eines Wartungsazimutwinkels einer Windenergieanlage und ein Verfahren zur Wartung einer Windenergieanlage sowie eine Windenergieanlage zur Durchführung eines der Wartungsverfahren.

Windenergieanlagen sollten regelmäßig gewartet werden. Darüber hinaus müssen, beispielsweise durch Blitzeinschlag oder Ähnlichem, beschädigte Windenergieanlagen repariert werden. Insbesondere wenn die Wartung oder eine Reparatur den Antriebsstrang der Windenergieanlage betrifft, kann es notwendig sein, den Rotor während der Reparatur zu arretieren, damit die Monteure sicher arbeiten können. Eine derartige Arretierung ist insbesondere dann notwendig, wenn ein Rotorlager beschädigt ist und dort Reparaturarbeiten durchgeführt werden. Auch beim Austausch von Teilen des Getriebes, des Generators oder Ähnlichem im Maschinenhaus, muss der Rotor während der Wartungsarbeiten notwendigerweise arretiert sein. Bekannterweise wird das Maschinenhaus mit dem Rotor dazu in Windrichtung ausgerichtet, und die Rotorblätter werden in Fahnenstellung gestellt und der Rotor dann arretiert.

Nachteilig an den bekannten Wartungsverfahren ist jedoch das Auftreten relativ hoher Drehmomente am Rotor bei wechselnden Windrichtungen. Insbesondere bei in der Dauer schwer abschätzbaren Wartungsarbeiten, wie beim Austausch von Rotorlagern oder der Zerlegung eines Getriebes, ist der Wartungszustand mit einer Jahresböe nachzuweisen, wobei Drehmomente in der Größenordnung des dreifachen Nennmoments auftreten.

Aus der EP 2 058 513 A2 ist ein Verfahren zum Betreiben einer Windenergieanlage bekannt, indem ein Rotor zur Wartung in eine Stillstandsposition gebracht wird. Die erreichte Stillstandsposition des Rotors wird erfasst.

In der DE 197 17 059 C1 ist ein Verfahren zum Verbringen der Rotorblätter einer Windkraftanlage in eine Parkstellung bei hohen Windgeschwindigkeiten offenbart.

In der WO 2008/145126 A2 ist ein Verfahren zum Betreiben einer Windkraftanlage offenbart, bei dem der Azimutwinkel der Rotorblätter bestimmt wird und der Pitchwinkel der Rotorblätter derart angepasst wird, dass über eine volle Rotation des Rotors ein im Wesentlichen gleichbleibender Angriffswinkel bereitgestellt wird.

In der US 2005/0175451 A1 ist eine Windkraftanlage auf einem Pylon offenbart mit einer Steuereinheit, die den Angriffswinkel des Windes am Rotorblatt auch in Abhängigkeit der Abweichung des Pylons von der Vertikalen anpasst.

Aufgabe der Erfindung ist es, eine Verbesserung der bekannten Wartungsverfahren, ein Verfahren zur Bereitstellung der für das verbesserte Wartungsverfahren benötigten Parameter sowie eine Windenergieanlage zur Durchführung eines Wartungsverfahrens zur Verfügung zu stellen.

Grundsätzlich ist der Begriff der Wartung bzw. der Wartungsarbeiten hier sehr weit ausgelegt zu verstehen, insbesondere sind damit nicht nur routinemäßige Wartungen, sondern auch Reparaturen, der Austausch von Teilen und anderes zu verstehen.

Die Aufgabe wird hinsichtlich des Verfahrens zur Bereitstellung der benötigten Parameter durch ein Verfahren zur Bestimmung des Wartungsazimutwinkels einer Windenergieanlage gelöst. Die Windenergieanlage weist ein auf einem Turm entlang eines Azimutwinkels drehbares Maschinenhaus auf. Vorzugsweise ist das Maschinenhaus von einem Windnachführsystem um eine im Wesentlichen gegenüber dem Erdboden senkrechte und vorzugsweise in einer Längsrichtung des Turmes verlaufende Drehachse drehbar. Der Azimutwinkel ist eine Winkelstellung des Maschinenhauses um die Drehachse.

Unter dem Wartungsazimutwinkel wird hier die Winkelstellung des Maschinenhauses relativ zur Windrichtung verstanden, in die das Maschinenhaus zur Wartung des Rotors oder des ihm nachfolgenden Antriebsstranges gedreht wird. Es kann im Wartungsazimutwinkel auf dem Turm arretiert werden oder bevorzugt im Wartungsazimutwinkel eventuell auftretenden Windrichtungsänderungen nachgeführt werden.

Als Nullwinkel der Azlmutwinkelmessung ist vorzugsweise die Windrichtung des auf die Anlage treffenden Windfeldes gewählt. Alternativ kann auch eine beliebige Himmelsrichtung, insbesondere auch die Hauptwindrichtung des Standorts, als Nullpunkt gewählt werden. Bei der Alternativ ist jedoch der Differenzwinkel zwischen der gewählten Himmelsrichtung und dem so bestimmten Wartungsazimutwinkel auf der einen sowie der gewählten Himmelsrichtung und der Windrichtung auf der anderen Seite, der physikalisch relevante Winkel, der in das erfindungsgemäße Bestimmungsverfahren einbezogen wird.

Die Windenergieanlage weist einen an einer im Betrieb vorzugsweise in den Wind gerichteten Maschinenhausseite drehbar angeordneten Rotor auf. Die Winkelstellung des Rotors um eine bevorzugt in einer Maschinenhauslängsrichtung angeordnete Rotordrehachse wird hier als der Rotorwinkel bezeichnet. Die Rotordrehachse ist vorzugsweise im Wesentlichen horizontal gegenüber dem Erdboden angeordnet. Die Formulierung umschließt hier auch Ausführungsformen, bei denen die Drehachse um einen Tiltwinkel, der häufig zwischen 3° und 10° liegt, gegenüber dem Erdboden geneigt sein kann.

Als Nullwinkel der Rotorwinkelmessung ist die Stellung eines der Rotorblätter in Turmlängsrichtung oberhalb des Maschinenhauses vorgesehen, die sogenannte 12 Uhr Stellung eines der Rotorblätter. Dem erfindungsgemäßen Verfahren zur Bestimmung des Azimutwinkels braucht wegen der 120°-Rotorsymmetrie ein Rotorwinkel nicht entlang einer vollen Umdrehung von 360°, sondern nur im kleineren Sektor von 0° bis 120° zugrunde gelegt werden, wenn der Rotor mit drei In Drehrichtung um 120° voneinander beabstandeten Rotorblättern ausgebildet ist. Für den Fall, dass bauartbedingte größere Toteranzen in der Rotorsymmetrie zu berücksichtigen sind, ist eine volle Rotorumdrehung zugrunde zu legen.

Die idee der Erfindung beruht auch auf der verblüffenden Erkenntnis, dass es nicht immer sinnvoll ist, den Wartungsazimutwinkel so zu wählen, dass in der exakten Wartungsazimutwinkelstellung das geringste Drehmoment am Rotor entsteht. Es hat sich in der Praxis herausgestellt, dass weiterführende, eine Umgebung des Wartungsazimutwinkels betreffende Kriterien für die Belastung entscheidender sind, als das alleinige oder zumindest weit überwiegende Kriterium eines Drehmomentminimums genau im Wartungsazimutwinkel. Das erfindungsgemäße Bestimmungsverfahren stellt daher insbesondere darauf ab, einen Wartungsazimutwinkel zu finden, in den das Maschinenhaus zur Wartung gedreht wird und der Innerhalb einer ganzen Windrichtungsschwankungsbreite nur möglichst kleine Drehmomente am Rotor zulässt. Der Rotor ist während der Wartung vorzugsweise arretiert, während das Maschinenhaus vorzugsweise auch während der Wartung drehbar bleibt, insbesondere um einer sich während der Wartung ändernden Windrichtung nachgeführt werden zu können.

Der Wartungsazimutwinkel kann für einen bestimmten Windenergieanlagentyp durch Simulation oder durch die Aufnahme realer, durch installierte Massinstrumente an der Windenergieanlage selber gewonnener Messwerte bestimmt werden. Zunächst wird ein Windfeld durch Simulation oder die Natur real vorgegeben und ihm wird eine Windrichtung zugeordnet. Die Windrichtung kann bei schwankendem Wind die aktuelle Hauptwindrichtung sein. Für die Bestimmung der Drehmomente und als Grundlage für das Bestimmungsverfahren des Wartungsazimutwinkels sind aber nur die relativen Winkel zwischen Windrichtung und Orientierung der Rotordrehachse entscheidend. Bevorzugt handelt es sich auch bei Simulationen um ein turbulentes Windfeld, da so die realen Gegebenheiten deutlich besser abgebildet werden.

Erfindungsgemäß wird für das Bestimmungsverfahren eine Vielzahl von Kombinationen von Rotorwinkel und Azimutwinkel durch ein Simulationsprogramm numerisch oder an einer realen Windenergieaniage eingestellt.

Es muss unterschieden werden zum einen, welche Kombinationen der Bestimmung eines Wartungsazimutwinkels überhaupt zugrunde gelegt werden und zum anderen, wie die dafür benötigten Kombinationen ermittelt werden. Zur Bestimmung der Kombinationen von Rotorwinkel und Azimutwinkel ist insbesondere der Fall des festgehaltenen Rotors bei konstantem Rotorwinkel einerseits und des veränderlichen Rotorwinkels zur Bestimmung des Wartungsazimutwlnkels andererseits zu unterscheiden. Insbesondere kann ein Wartungsazimutwinkel für einzelne festgehaltene Rotorwinkel oder gleichzeitig für mehrere oder alle Rotorwinkel bestimmt werden.

Zu vorzugsweise jeder einzelnen der Kombinationen werden die durch das Windfeld, insbesondere auch turbulente Windfeld, auf den arretierten Rotor wirkenden Drehmomente ermittelt. Die Ermittlung der Drehmomente kann ebenfalls durch ein Simulationsprogramm numerisch oder durch einen am Rotor der Rotorwelle oder dem nachgeordneten Antriebsstrang angeordneten Drehmomentmesser messtechnisch ermittelt werden. Es kann auch beides kombiniert erfolgen, wobei insbesondere die Ergebnisse der Simulation durch Messungen gestützt und ggf. angepasst werden. Bei der Simulation werden die Drehmomente berechnet. Insbesondere bei einer Simulation kann die Windrichtung genau aus Norden kommend gewählt werden. Dadurch wird die Berechnung vereinfacht.

Insbesondere bei der Durchführung von Simulationen spielt es keine Rolle, ob der Rotorwinkel bei festgehaltenem Azimutwinkel oder umgekehrt, der Azimutwinkel bei festgehaltenem Rotorwinkel verändert wird oder in Monte Carlo Simulationen nacheinander zufällige Kombinationen beider Winkel betrachtet werden, bis der Untersuchungsraum ausreichend abgedeckt ist.

Zur Ermittlung der am Rotor wirkenden Drehmomente bei veränderlichem Rotorwinkel und Azimutwinkel bei unterschiedlichen Windstärken können sowohl Simulationsverfahren als auch reale Messungen durchgeführt werden. Simulationsverfahren liefern auch für beliebig viele Kombinationen von Azimutwinkel und Rotorwinkel auf einfache, weil numerische Weise Drehmomentwerte, jedoch können diese von den realen Drehmomenten abweichen. Reale Messungen des Drehmomentes bei unterschiedlichen Winkelkombinationen mittels Drehmomentmessgeräten sind genauer, aber zeitaufwendig und nur bei hinreichend starkem Wind überhaupt durchführbar.

Es kann für Drehmomentmessungen beispielsweise bei festgehaltenem Rotorwinkel der Azimutwinkel verändert worden und eine Messung nach jeder Veränderung des Azimutwinkels vorgenommen werden, bis der Azimutwinkel eine 360° Umdrehung durchlaufen hat. Danach kann ein neuer Rotorwinkel eingestellt und eine entsprechende neue Messreihe durchgeführt werden.

Vorzugsweise werden jedoch insbesondere bei der Bestimmung der Werte durch Messungen umgekehrt der Azimutwinkel festgehalten und der Rotorwinkel zwischen 0° und 120° verändert und Drehmomentmesswerte für jede Veränderung aufgenommen, um den Azimutwinkel nachfolgend um ein bestimmtes Inkrement weiterzudrehen und in der neuen Stellung wiederum die Rotorwinkel in dem genannten Winkelsektor zu verändern.

Praktisch ist es leichter und weniger zeitaufwendig, den Rotorwinkel mehrfach über größere Winkelsektoren einfach durch Drehen des Rotors und wiederholtes Festbremsen neu einzustellen, als den Wartungsazimutwinkel durch Drehen des ganzen Maschinenhauses über größere Winkelsektoren widerholt neu einzustellen.

Im Fall des festgehaltenen Rotorwinkels wird die Vielzahl von Kombinationen von Rotorwinkel und Azimutwinkel durch Verändern des Azimutwinkels erzeugt. Bei Simulationen werden die auftretenden Drehmomente unter Einwirkung eines, in der Regel synthetisch generierten, bevorzugt turbulenten Windfeldes ermittelt.

Die berechneten oder gemessenen Drehmomente werden dem Azimutwinkel der Kombination zugeordnet So kann einem festen Azimutwinkel je nach Rotorwinkel eine Vielzahl voneinander verschiedener Drehmomente zugeordnet sein. Insbesondere durch Veränderungen der Windstärke und Windrichtung über der Zeit sind dem Rotor auch bei einem festgehaltenen Rotorwinkel bei konstantem Azimutwinkel verschiedene Drehmomente zugeordnet.

Es wird eine Drehmomenteinhüllende der Drehmoment-Azimutwinkelzuordnungen ermittelt. Die Drehmomenteinhüllende hüllt die ermittelten Drehmoment-Azimutwinkelzuordnungen in einer repräsentativen Form ein. Das kann verschiedenes bedeuten: Die Einhüllende kann die betragsmäßig größten Drehmomentwerte zu vorzugsweise jedem der Azimutwinkel umfassen. Benachbarte betragsmäßig größte Drehmomentwerte können als Einhüllendenwerte vorzugsweise stetig, insbesondere polygonal oder glatt miteinander zur Einhüllenden verbunden werden. Statt der betragsmäßig größten Drehmomentwerte zu Jedem der Azimutwinkel kann als Einhüllendenwert auch statistisch aus einem Drehmomentmittelwert der ermittelten Drehmomente zu jedem Azimutwinkel und bevorzugt unter Berücksichtigung der zugehörigen Standartabweichung bestimmt werden. Im letzteren Fall wird abhängig von der gewünschten Auslegungssicherheit ein Vielfaches der Standardabweichung der ermittelten Drehmomente zum Drehmomentmittelwert des Azimutwinkels addiert. Es sind aber auch noch andere auf bekannte Methoden zur Auswertung stochastischer Daten beruhende Verfahren zur Bestimmung der Einhüllenden möglich.

Insbesondere können der Bestimmung der Drehmomenteinhüllenden von vornherein Kombinationen aus Rotorwinkeln und Azimutwinkel zugrunde gelegt werden, wobei auch der Rotorwinkel veränderlich ist. Es kann aber auch für jeden vorgegebenen, festgehaltenen Rotorwinkel jeweils ein Wartungsazimutwinkel ermittelt werden, wobei die einzelnen Wartungsazimutwinkel vorzugsweise anschließend miteinander verglichen werden. Dabei wird dann für jeden vorgegebenen Rotorwinkel eine Drehmomenteinhüllende ermittelt.

Durch das Festhalten des Rotorwinkels kann ein besonders günstiger Wartungsazimutwinkel in Abhängigkeit vom Rotorwinkel bestimmt werden, welcher besonders niedrige Drehmomentenwerte aufweist.

Die Drehmomenteinhüllende ordnet vorzugsweise jedem Azimutwinkel vorzugsweise genau einen Drehmomenteinhüllendenwert zu. Die Drehmomenteinhüllende ist bei den genannten Ausführungsformen der Erfindung Grundlage der weiteren Verfahrensschritte zur Ermittlung des Wartungsazimutwinkels.

Es werden Umgebungen der Azimutwinkel gebildet. Mit Umgebung ist hier ein Winkelbereich um einen vorgegebenen Azimutwinkel bezeichnet. Die Umgebung weist eine gewisse Sektorgröße auf, d.h. dass sie einen gewissen Azimutwinkelbereich abdeckt. Es können Umgebungen zu voneinander um ein vorzugsweise gleich großes Inkrement beabstandeten Azimutwinkein gebildet werden. Die Umgebungen können aber auch kontinuierlich entlang der Azimutwinkelachse gebildet werden. Den Azimutwinkeln der Umgebungen sind vorzugsweise eindeutige Drehmomenteinhüllendenwerte zugeordnet.

Die Umgebungen weisen eine vergleichbare Sektorgröße auf. Die Umgebungen können insbesondere alle innerhalb eines vorgegebenen Sektorgrößenbereichs liegen. Der Sektorgrößenbereich ist vorzugsweise aus einer Durchschnittssektorgröße mit einer Toleranz von ±10%, vorzugsweise ±5% seiner Sektorgröße gebildet. Es sollen hier aber auch alle anderen Abweichungen zwischen ±20° bis ±1° von einer Durchschnittssektorgröße offenbart sein. Günstigerweise sind alle Umgebungen im Wesentlichen gleich groß, vorzugsweise alle genau gleich groß und vorzugsweise symmetrisch um den ihnen zugeordneten, vorzugsweise mittig in der Umgebung angeordneten, vorgegebenen Azimutwinkel gebildet.

Die Sektorgröße der Umgebungen um einen Azimutwinkel trägt den wechselnden Windrichtungen Rechnung, denn es ist physikalisch gleichbedeutend, ob der Azimutwinkel gegenüber einer gleichbleibenden Windrichtung innerhalb der Umgebung verändert wird und die am Rotor wirkenden Drehmomente gemessen werden, oder ob umgekehrt der Azimutwinkel gegenüber dem Erdboden fixiert bleibt und sich die Windrichtung innerhalb der Sektorgröße der Umgebung gegenüber dem Erdboden verändert und dann die am Rotor wirkenden Drehmomente gemessen werden.

Die Sektorgröße ist ein Maß für die am Aufstellungsort der Windenergieanlage vorzugsweise üblicherweise herrschenden Schwankungen der Windrichtung. Bevorzugt beträgt die Sektorgröße etwa ±15°, Insbesondere bevorzugt etwa ±8°.

Der Wartungsazimutwinkel wird innerhalb einer ausgewählten Umgebung bestimmt. Die Umgebung wird ausgewählt, indem die zugehörigen Betragswerte der Drehmomenteinhüllendenwerte bestimmt werden und die Drehmomenteinhüllendenwerte der verschiedenen Umgebungen miteinander verglichen werden und eine Umgebung mit betragsmäßig kleineren Drehmomenteinhüllendenwerten ausgewählt wird.

Vorzugsweise wird innerhalb einer Vielzahl von Umgebungen, vorzugsweise jeder einzelnen Umgebung, jeweils der betragsmäßig größte Drehmomenteinhüllendenwert bestimmt, die jeweils betragsmäßig größten Drehmomenteinhüllendenwerte der Umgebungen werden dann miteinander verglichen und es wird die Umgebung ausgewählt, deren derart bestimmter betragsmäßig größter Drehmomenteinhüllendenwert der kleinste der miteinander verglichenen betragsmäßig größten Drehmomenteinhüllendenwerte ist.

Es kann auch eine maximale Differenz der Drehmomenteinhüllendenwerte innerhalb der Umgebungen ermittelt werden und die Umgebung mit der kleinsten maximalen Differenz ausgewählt werden.

Der Wartungsazimutwinkel wird dann innerhalb der ausgewählten Umgebung bestimmt. Dazu kann der Mittelwert des Sektors als Wartungsazimutwinkel bestimmt werden. Vorzugsweise wird der einem lokalen, vorzugsweise hinsichtlich der Umgebung globalen Minimum der Drehmomenteinhüllenden in der ausgewählten Umgebung zugeordnete Azimutwinkel als Wartungsazimutwinkel bestimmt. Dadurch ist das an dem Rotor während der Wartung angreifende Drehmoment, bei aus der Hauptwindrichtung blasendem Wind, besonders gering.

Besonders bevorzugt bildet das dem Wartungsazimutwinkel zugeordnete Drehmoment ein lokales Drehmomentminimum aus. Dabei kann es sich auch um das dem Mittelwert der Umgebung nächstkommende Minimum handeln.

In einer weiteren Ausführungsform des erfindungsgemäßen Verfahrens, wird innerhalb jeder der Umgebungen das Minimum mit den höchsten benachbarten Maxima ermittelt. Darauf folgend wird die Umgebung ausgewählt, deren höchstes benachbartes Maximum am kleinsten ist. Das dem kleinsten Maximum zugeordnete Minimum wird dann als Wartungsazimutwinkel bestimmt.

Es Ist auch denkbar, zur Bestimmung des Wartungsazimutwinkels eine durchschnittliche Steigung auf jeder der beiden Seiten eines vorzugsweise Mittelwertes der Umgebung zu bestimmen und die Umgebung mit den betragsmäßig kleinste durchschnittlichen Steigungen auf jeder der beiden Seiten auszuwählen und den Wartungsazimutwinkel als den Mittelwert der ausgewählten Umgebung zu bestimmen.

Des Weiteren kann eine Steigung in jedem Punkt der Umgebung bestimmt werden und eine Umgebung mit kleinsten Steigungen ausgewählt werden und ein Minimum der ausgewählten Umgebung als Wartungsazimutwinkel bestimmt werden.

In einer anderen Ausführungsform des erfindungsgemäßen Bestimmungsverfahrens wird der dem breitesten Minimum zugeordnete Azimutwinkel zur Wartung bestimmt. Dabei wird unter dem breitestem Minimum innerhalb der ausgewählten Umgebung das Minimum verstanden, dessen unmittelbare Umgebung die im Vergleich zu unmittelbaren Umgebungen anderer Minima kleinsten Steigungen der Drehmomenteinhüllenden aufweist. Da das breiteste Minimum nicht unbedingt das globale Minimum sein muss, kann zwar das Drehmoment bei aus Hauptwindrichtung blasendem Wind etwas größer sein, jedoch sind die Drehmomente bei Schwankungen der Windrichtung um das breiteste Minimum ggf. geringer als bei Schwankungen um das globale Minimum.

Insbesondere sieht eine bevorzugte Ausführungsform der Erfindung eine Kombination von zwei oder mehreren der oben angeführten Auswahlkriterien vor, wobei insbesondere eine Wichtung der Einzelkriterien mittels eines Wichtungsfaktors vorgenommen wird.

Die Aufgabe wird zweitens durch ein Verfahren zur Wartung einer Windenergieanlage mit einem auf einem Turm entlang eines Azimutwinkels drehbaren Maschinenhaus und einem am Maschinenhaus entlang eines Rotorwinkels drehbaren Rotor gelöst, wobei das Maschinenhaus in einen, insbesondere durch wenigstens eines der oben genannten Verfahren bestimmten Wartungsazimutwinkel gedreht wird, der Rotor arretiert wird und das Maschinenhaus unter Beibehaltung des Wartungsazimutwinkels gewartet wird.

Der Rotor wird während der Wartung erfindungsgemäß arretiert, um die Wartungsarbeiten an dem ruhenden Antriebsstrang überhaupt erst sicher durchführen zu können. Das Maschinenhaus wird in den Wartungsazimutwinkel gedreht und kann dann dort arretiert sein.

Vorzugsweise wird das Maschinenhaus jedoch mittels einer Windnachführeindchtung auch während der Wartungsarbeiten bei Windrichtungsänderungen gedreht und einer sich ggf. während der Wartung ändernden Windrichtung bzw. Hauptwindrichtung nachgeführt.

In einer bevorzugten Weiterbildung des erfindungsgemäßen Wartungsverfahrens werden in einem elektronischen Speicher unterschiedlichen Rotorwinkeln jeweils zugeordneten Wartungazimutwinkel zusammen mit dem jeweiligen Rotorwinkel abgelegt. Mit einer Messeinrichtung, vorzugsweise Winkelmesseinrichtung, die mit einer Datenverarbeitungseinheit in Verbindung steht, wird der Rotorwinkel gemessen, durch die Datenverarbeitungseinheit wird dem gemessenen Rotorwinkel der zugehörige Wartungsazimutwinkel zugeordnet und die Windnachführeinrichtung dreht das Maschinenhaus in den zugehörigen Wartungsazimutwinkel. Das Wartungsverfahren wird günstigerweise angewendet, wenn mehrere durch den Rotorwinkel parametrisierte Drehmoment-Azimutwinkel-Zusammenhänge aufgenommen wurden. Damit ist eine dem Rotorwinkel angepasste Wartung bei geringer Drehmomentbelastung möglich.

Das Verfahren eignet sich besonders zur Anwendung bei durch Defekt nicht mehr drehbaren Rotoren.

In einer anderen bevorzugten Weiterbildung des erfindungsgemäßen Verfahrens wird der Rotor vor seiner Arretierung in einen Wartungsrotorwinkel und in den diesem Wartungsrotorwinkel zugeordneten Wartungsazimutwinkel gedreht. Die beiden Winkel können In beliebiger Reihenfolge nacheinander oder auch gleichzeitig eingestellt werden.

Letztgenanntes Verfahren kann aber nur durchgeführt werden, wenn der Rotor trotz Defektes noch drehbar ist.

Vorzugsweise wird das Maschinenhaus in einen Wartungsazimutwinkel zwischen -170° und -100° oder zwischen 100° und 170°, besonders bevorzugt bei -135° oder +135° gedreht. Bestimmungsgemäß liegen in diesen Winkelsektoren besonders günstige Wartungsazimutwinkel.

In einer besonders bevorzugten Weiterbildung der Erfindung wird ein in dem Maschinenhaus angeordneter Triebstrang zumindest teilweise demontiert, eine Kommunikationsverbindung zwischen der Datenverarbeitungseinheit und einer Nabe des Rotors unterbrochen und eine Hilfseinrichtung mit der Datenverarbeitungseinheit verbunden und damit die Kommunikationsverbindung zur Nabe des Rotor simuliert.

Die im Maschinenhaus angeordnete Datenverarbeitungseinheit übernimmt in einer vorteilhaften Ausgestaltung der Erfindung auch die Regelung und Steuerung der Windenergieanlage im Normalbetrieb zur Netzeinspeisung. Üblicherweise werden hierzu die Blattanstellwinkel von einem in einer Rotornabe angeordneten Blattverstellsystem eingestellt. Als primäres Bremssystem ist die Blattverstellung für die Sicherheit einer großen Windenergieanlage von zentraler Bedeutung. Die Kommunikation zwischen der Datenverarbeitungseinheit und dem Blattverstellsystem in der Rotornabe erfolgt üblicherweise über einen Kabelstrang, der durch eine Bohrung in einer Rotorwelle oder einem Achszapfen, und ggf. durch ein Hauptgetriebe geführt ist. Die Datenübertragung vom stehenden in das drehende System erfolgt vorteilhaft über Schleifringe oder einen berührungslosen Drehübertrager. Gelegentlich dient das erfindungsgemäße Verfahren mit Arretierung des Rotors zum Austausch von Komponenten, z.B. der Kabelverbindung, der Schleifringe, des Blattverstellsystems oder gar des gesamten Hauptgetriebes, so dass eine Unterbrechung der Kommunikationsverbindung zur Rotomabe erforderlich ist. Insbesondere bei älteren Windenergieanlagen führt eine Unterbrechung der Kommunikation mit der sicherheitskritischen Blattverstellung zu einem Zustand, in dem die gesamte Steuerung der Windenergieanlage nicht mehr funktionsfähig ist. Somit kann die Datenverarbeitungseinheit bzw. Steuerung auch keine Windnachführeinrichtung zur Einstellung eines Wartungsazimutwinkels ansteuern.

Um dies zu vermeiden, sieht eine besonders vorteilhafte Ausführungsform der Erfindung vor, dass für derartige Arbeiten die Kommunikationsverbindung in die Rotornabe durch eine Hilfseinrichtung ersetzt wird, die eine funktionierende Kommunikation in die Rotomabe simuliert. Das Umstecken der Hilfseinrichtung auf die Anschlüsse der Kommunikationsverbindung kann in wenigen Minuten erfolgen, in denen keine größeren Windgeschwindigkeits- und/oder Windrichtungsänderungen zu erwarten sind.

Eine derartige Hilfseinrichtung, auch "Nabenemulationsbox" genannt, simuliert unter anderem für die Datenverarbeitungseinheit die Statusmeldungen, die z.B. von einem fehlerfreien Blattverstellsystem oder anderen Komponenten in der Rotornabe, z.B. Notausschalter, Blattenteisungssysteme, Sensorik oder sonstige Systeme, ausgesendet werden, um für die Datenverarbeitungseinheit einen betriebsbereiten Zustand zu simulieren. Nach dem Start des erfindungsgemäßen Verfahrens und dem Umstecken auf die Hilfseinrichtung befindet sich die Anlage in einem sicheren Wartungsmodus, so dass auch länger andauernde Reparaturarbeiten gefahrlos durchgeführt werden können. Nach Beendigung der Arbeiten wird selbstverständlich die Hilfseinrichtung wieder durch die ordnungsgemäße Kommunikationsverbindung mit der Rotomabe ersetzt. Bevorzugt wird die Rotorarretierung erst gelöst, nachdem die Kommunikationsverbindung in die Rotomabe fehlerfrei wiederhergestellt und getestet ist. Somit wird ein sehr sicheres Verfahren bereitgestellt.

Alternativ zu dieser Ausführungsform des erfindungsgemäßen Verfahrens kann bei neu zu entwickelnden Windenergieanlagen hierzu ein Wartungsmodus in der Datenverarbeitungsanlage bzw. Steuerung der Windenergieanlage vorgesehen werden, in dem trotz unterbrochener Kommunikation zur Rotornabe die Windnachführung betriebsbereit bleibt.

Die Aufgabe wird auch durch eine Windenergieanlage mit einem auf einem Turm entlang eines Azimutwinkels drehbaren Maschinenhaus und einem am Maschinenhaus entlang eines Rotorwinkels drehbaren Rotor gelöst, und mit einem elektronischen Speicher für wenigstens einen Wartungsazimutwinkel und einer Windnachführeinrichtung, mit der das Maschinenhaus zur Wartung in einen der Wartungsazimutwinkel drehbar ist.

Günstigerweise sind in dem elektronischen Speicher mehrere Wartungsazimutwinkel für unterschiedliche Rotorwinkel zusammen mit dem Rotorwinkel abgelegt.

Eine Winkelmesseinrichtung des Rotorwinkels steht mit einer Datenverarbeitungseinheit in Verbindung und in der Datenverarbeitungseinheit ist einem gemessenen Rotorwinkel ein zugehöriger Wartungsazimutwinkel zugeordnet, und mit einer Windnachführeinrichtung ist das Maschinenhaus in den Wartungsazimutwinkel drehbar.

Der Speicher und/oder die Datenverarbeitungseinheit können Bestandteil der Windenergleanlage sein. Eine solche Windenergieanlage ist autark.

Es ist aber auch denkbar, dass die Windenergieanlage eine externe Schnittstelle aufweist, über die Rotonwinkelmessdaten in eine zentrale Datenverarbeitungseinheit, insbesondere eines Windparks, abgebbar sind und über die Wartungsazimutwinkeldaten aus einer zentralen, für einen Windpark vorgesehenen Speichereinheit abrufbar sind.

Vorteilhafterweise wird damit auf mehrere Speicher und Datenverarbeitungseinheiten verzichtet.

Die Erfindung wird anhand eines Ausführungsbeispiels in vier Figuren beschrieben. Dabei zeigen:
- Fig. 1: eine schematische Draufsicht einer Windenergieanlage,
- Fig. 2: eine schematische Seitenansicht einer Windenergieanlage,
- Fig. 3: eine schematische Vorderansicht einer Windenergieanlage,
- Fig. 4: eine grafische Darstellung der Drehmomente in Abhängigkeit vom Azimutwinkel bei vier verschiedenen Rotorpositionen.

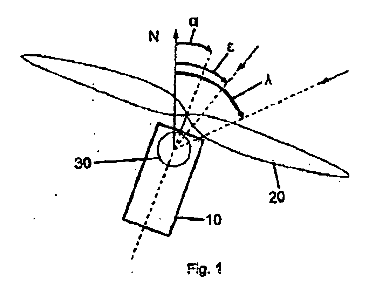

Fig. 1 zeigt in einer schematischen Draufsicht eine Windenergieanlage mit einem Maschinenhaus 10 und einen Rotor 20. Der bodenseitig des Maschinenhauses 10 vorgesehene Turm 30 Ist gleichzeitig die Drehachse des Maschinenhauses 10 mit dem Rotor 20. Eine Winkelstellung des Rotors 20 gegenüber Norden N, als beliebig gewähltem Bezugspunkt, wird als Azimutwinkel α bezeichnet. Der Azimutwinkel α ist über einen das Maschinenhaus 10 auf dem Turm 30 drehenden Antrieb steuerbar. Eine Windrichtung ε ist gegenüber dem gleichen Bezugspunkt Norden N eingezeichnet. Im Betrieb wird der Rotor 20 durch Verändern des Azimutwinkels α der Windrichtung ε nachgeführt, so dass beide im Wesentlichen übereinstimmen. Die Differenz zwischen Azimutwinkel α und Windrichtung ε in Fig. 1 zeigt den erfindungsgemäßen Wartungsazlmutwinkel α_{w}.

In Fig.1 ist auch der Winkel λ der Wellenrichtung des Windes gegenüber Nord N eingezeichnet Üblicherweise weht der Wind aus der Windrichtung ε in wellenförmig schwankender Windstärke um einen Mittelwert. Insbesondere kann die Wellenrichtung λ von der Windrichtung ε abweichen.

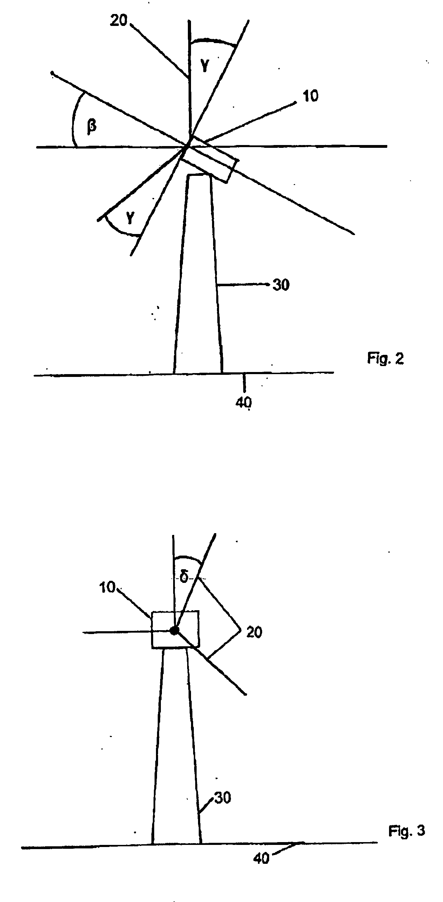

Fig. 2 stellt den prinzipiellen Aufbau der Windenergieanlage gemäß Fig. 1 in einer Seitenansicht dar. Das Maschinenhaus 10 ist um den (nicht eingezeichneten) Azimutwinkel α drehbar auf einem Turm 30 angeordnet. Im Betrieb luvseitig des Maschinenhauses 10 ist der Rotor 20 vorgesehen. Fig. 2 zeigt einen zur Veranschaulichung übertrieben dargestellten Tiltwinkel β des Maschinenhauses 10. Der Tiltwinkel β ist als Winkel einer Längsachse des Maschinenhauses 10 gegenüber der Erdoberflächentangentialen (Horizontalen) definiert. Die Luvseite des Maschinenhauses 10 ist in Fig. 1 um den Tiltwinkel β leicht angehoben.

Fig. 2 zeigt auch den Konuswinkel γ des Rotors 10. Der Konuswinkel γ ist für alle drei voneinander um 120° beabstandete Rotorblätter gleich gewählt. Der Konuswinkel γ ist definitionsgemäß der Winkel, mit dem jedes einzelne der Rotorblätter aus einer Rotorblattebene des Rotors 20 vom Maschinenhaus 10 luvseitig geneigt ist.

Fig. 3 zeigt die Windenergieanlage in einer Vorderansicht mit dem sich im Betrieb ständig ändernden Rotorwinkel δ. Der Rotorwinkel δ ist der Winkel eines vorbestimmten Rotorblattes 20 gegenüber der Senkrechten zum Erdboden 40. Er liegt somit zwischen 0° und 360°. Bei symmetrischen Rotoren ist eine Unterscheidung der einzelnen Blätter zu Durchführung des erfindungsgemäßen Verfahrens nicht erforderlich, weshalb der Bereich von 0° bis 120° ausreicht. Die Senkrechte fällt in Fig. 3 mit der Längsrichtung des Turms 30 zusammen.

Unter einem Wartungsazimutwinkel α_{w} wird der Azlmutwinkel α verstanden, in den das Maschinenhaus 10 zur Wartung der Windenergleanlage relativ zur Windrichtung gedreht wird. In einer vorgegebenen Winkelumgebung des Wartungsazimutwinkels α_{w} sind die höchsten auf den arretierten Rotor 20 wirkenden Drehmomente minimal. Die verschiedenen Drehmomente kommen durch die sich leicht ändernden Windgeschwindigkeiten und - richtungen, die sogenannte Windturbulenz zustande, denen der arretierte Rotor 20 ausgesetzt ist.

Der Wartungsazimutwinkel α_{w} wird für jeden Windanlagentyp individuell bestimmt. Er hängt dabei insbesondere von Tiltwinkel β und Konuswinkel γ, aber auch von der Verwindung und sonstigen Geometrie des Rotorblattes ab. Die Verwindung des Rotorblattes ist im Wesentlichen die Eigenverdrehung jedes einzelnen Rotorblattes entlang seiner Längsrichtung. Bei Wahl anderer Rotorblätter bei gleichem Windenergieanlagentyp ergibt sich somit in der Regel ein anderer Wartungsazimutwinkel α_{w}. Bei anderem Tiltwinkel β und/oder Konuswinkel γ ergibt sich ebenfalls ein anderer Wartungsazimutwinkel α_{w}. Bei nur kleineren geometrischen Änderungen kann die Änderung des Wartungsazimutwinkels α_{w} so gering sein, dass sie für die Praxis zu vernachlässigen ist.

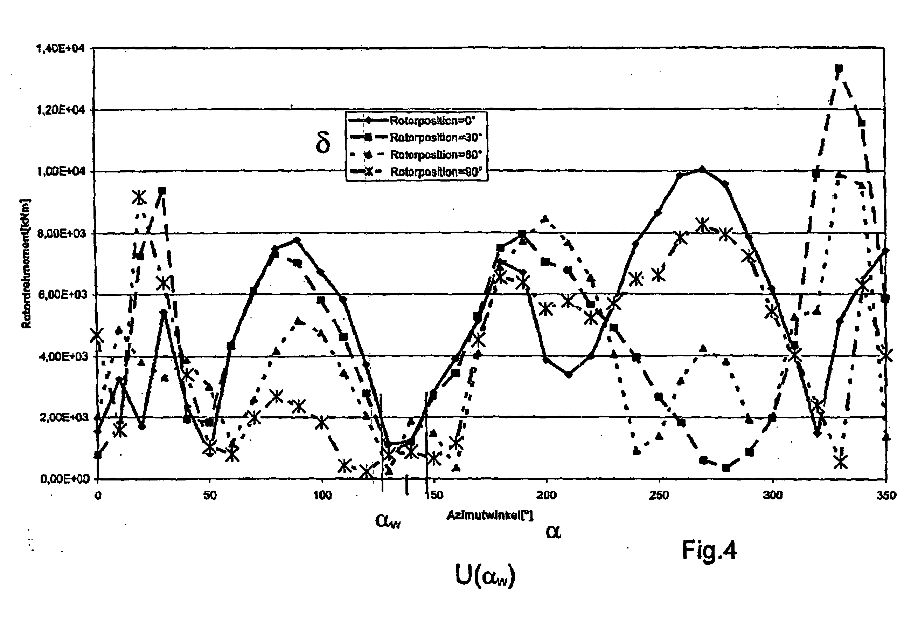

Das Verfahren zur Bestimmung des Wartungsazimutwinkels α_{w} wird dabei anhand der Fig.4 erläutert.

Zunächst wird die Windrichtung ε bestimmt. Der Rotor 20 wird in die Windrichtung ε ausgerichtet. Die Windrichtung ε ist in Fig. 4 Nord N und damit ist ε=0. Der Azimutwinkel α wird gegenüber Nord N gemessen.

Jedes Rotorblatt wird in die so genannte Fahnenstellung gebracht, d.h. gegenüber der Teillastbetriebsstellung (fine pitch) beispielsweise um 91° um seine jeweilige Längsachse gedreht. In der Fahnenstellung erzeugt der genau aus Windrichtung N kommende Wind ein geringes Drehmoment. Zur Bestimmung des Drehmomentes kann an dem Rotorlager zwischen Maschinenhaus 10 und Rotor 20 ein Drehmomentmesser oder auf der Rotorwelle eine Dehnmessstreifen-Messbrücke vorgesehen sein. Die Drehmomentbestimmung in Fig. 4 wird aber durch ein Simulationsprogramm durchgeführt.

Zunächst wird der Rotorwinkel δ=0° gewählt. In diesem Rotorwinkel δ ist die Längsrichtung einer der drei Rotorblätter senkrecht nach oben (vom Erdboden 40 weg weisend) angeordnet. Für den Rotorwinkel δ=0° wird das Drehmoment für eine Reihe von gleichmäßig beabstandeten Azimutwinkeln α bestimmt. Die durch den Rotorwinkel δ=0° parametrisierte Kurve ist durch eine Rautenlinie gekennzeichnet. Jeder Einzelwert kann dabei z.B. der Mittelwert oder der Maximalwert von vielen Einzelmessungen sein, so dass die dargestellte Rautenlinie bereits die Einhüllende vieler Einzelwerte sein kann. In Fig. 4 werden Bestimmungen des Drehmomentes in Abständen von α=10° durchgeführt. Die Bestimmungen wurden für die 10° voneinander beabstandeten Azimutwinkel α entlang einer Vollumdrehung von 360° des Maschinenhauses 10 um den Turm 30 durchgeführt. Die Drehmomentkurve für den Rotorwinkel δ=0° weist Minima bei α=30°, 50°, 135°, 210°, und 315° auf.

Fig. 4 zeigt die Drehmomentkurve auch für Rotorwinkel δ=30° (Quadratenkurve), für δ=60° (Dreieckekurve) und für δ=90° (Stemekurve). Entlang jeder Kurve ist jeder der Rotorflügel in der Fahnenstellung. Es können auch weitere parametrisierte Kurven bestimmt werden.

In einem nächsten Schritt wird aus den vier parametrisierten Drehmomentkurven in Fig. 4 eine (nicht eingezeichnete) Einhüllende der vier Kurven ermittelt. Die Einhüllende ist durch den maximalen Drehmomentwert der vier Kurven für jeden Azimutwinkel definiert.

Die Bestimmung des Wartungsazimutwinkels α_{w} erfolgt anhand der Einhüllenden.

Zunächst wird eine Umgebung U(α) definierter Sektorgröße, z.B. U(α)=+10° vorgegeben. Die Umgebung U(a) wird dann über die x-Achse in Fig. 4 kontinuierlich beginnend von α=0° bis α =360° bezogen auf den Mittelpunkt der Umgebung U(α) verschoben. Für jede Position der Umgebung U(α) entlang der x-Achse wird das maximale Drehmoment der Einhüllenden in der Umgebung U(α) bestimmt und gespeichert. Jeder Umgebungsposition U(α) ist ein maximales Drehmoment zugeordnet.

Nach dem Durchlauf der Umgebung U(α) über alle Azimutwinkel α und Registrierung der höchsten Drehmomente wird die Umgebung U(α_{w}) ausgewählt, deren höchstes Drehmoment global minimal ist. Die ausgewählte Umgebung U(α_{w}) ist Fig. 4 eingezeichnet. Der Mittelpunkt der ausgewählten Umgebung U(α_{w}) ist der Wartungsazimutwinkel α_{w}. Der Wartungsazimutwinkel beträgt in Fig. 4 α_{w} =135° und gilt für beliebige Rotorwinkel.
Die Größe der Umgebung U=±10° ist so gewählt, dass sie den wesentlichen Windrichtungsschwankungen eines Windes am Aufstellungsort der Windenergieanlage Rechnung trägt.

Der Wartungsazimutwinkel α_{w} ist eine Funktion des Tiltwinkels β, des Konuswinkels γ und der Verwindung und Geometrie des Rotorblatts. Für eine vorgegebene Konstellation ist der Wartungsazimutwinkel α_{w} eine feststehende Größe der Windenergieanlage.

Zur Durchführung von Wartungen an der Windenergieanlage wird das Maschinenhaus 10 der Windenergleanlage in den Wartungsazimutwinkel von α_{w} =135° gegenüber der Windrichtung gedreht und bei sich ändernder Windrichtung mit der Windnachführeinrichtung der Windrichtung nachgeführt, wobei die Rotorblätter immer in Fahnenstellung verbleiben Die während der Wartungsarbeiten auftretenden Windrichtungsschwankungen erzeugen damit ein minimales höchstes Drehmoment am Rotor 20.

Es ist auch eine Variante des oben beschriebenen Verfahrens zur Bestimmung eines Wartungsazimutwinkels denkbar. Dabei wird nicht eine Einhüllende für alle Rotorwinkel δ bestimmt, sondern der Rotorwinkel δ wird ermittelt und die mit dem bestimmten Rotorwinkel δ parametrisierte Kurve wird selber als Einhüllende dem oben beschriebenen Verfahren unterworfen. In diesem Fall fällt die Einhüllende mit der Messkurve zusammen.

Eine weitere Variante des erfindungsgemäßen Verfahrens zur Bestimmung des Wartungsazimutwinkels α_{w} durch Simulationsrechnungen sieht folgendes Vorgehen vor: Da Lastsimulationen mit turbulentem Windfeld sehr rechenzeitintensiv und somit kostspielig sind, wird zunächst eine grobe Abschätzung der für unterschiedliche Kombinationen von Rotorwinkel δ und Azimutwinkeln α vorliegenden Drehmomente mit konstanter Windgeschwindigkeit durchgeführt. Bevorzugt wird dies durch je eine Simulationsrechnung erzielt, bei der bei festgehaltenem Rotorwinkel δ der Azimutwinkel α von 0 bis 360° variiert wird, so dass sich für jeden Rotorwinkel eine Kurve gemäß Fig. 4 ergibt. In einem zweiten Schritt werden Bereiche von potentiellen Wartungsazimutwinkeln α_{w} aus dem Kurvenverlauf ausgewählt, im dargestellten Kurvenverlauf erscheinen beispielsweise die Bereiche um die Azimutwinkel von ca. 50° und 135° besonders interessant. In einem dritten Schritt werden für diese ausgewählten Winkelbereiche zusätzliche Simulationsrechnungen mit turbulenten Windfeldern durchgeführt. Die Auswahl des endgültigen Wartungsazimutwinkels α_{w} erfolgt dann auf Basis der in diesen turbulenten Simulationen ermittelten Drehmomenteinhüllenden.

Die Bestimmung der Drehmomenteinhüllenden erfolgt gemäß oben beschriebenem Vorgehen. Ein besonders bevorzugtes Vorgehen sieht vor, dass von jeder Kombination von Rotorwinkel δ und Azimutwinkeln α beispielsweise 6 oder 10 turbulente 10 min-Zeitreihen simuliert werden, deren Widfeld beispielsweise den Jahreswind, d.h. die im Laufe eines Jahres zu erwartende maximale Windgeschwindigkeit, repräsentiert. Von jeder Zeitreihe wird sodann der Maximalwert des Drehmomentes bestimmt. Die 6 oder 10 Maximalwerte des Drehmomentes der einzelnen Zeitreihen werden sodann arithmetisch gemittelt und dieser Mittelwert als Kennwert der Drehmomenteinhüllenden genutzt. Die aufwendigen, turbulenten Simulationen werden somit auf wenige, vorausgewählte Umgebungen beschränkt. Dennoch erhält man für den ausgewählten Wartungsazimutwinkel α, die hohe Auslegungssicherheit einer Simulation mit turbulentem, also realitätsnahem Windfeld und zusätzlicher statistischer Absicherung durch eine Mehrzahl von Simulationen.

Zur Durchführung des Verfahrens weist die Windenergleanlage eine Messeinrichtung auf, die die Messung des Rotorwinkels δ gestattet. Für den Fall, dass der Rotorwinkel δ durch einen Defekt nicht mehr veränderbar ist, gestattet die Messeinrichtung deren exakte Bestimmung.

Die Windenergieanlage weist bei der Variante eine Speichereinheit auf oder ist mit einer solchen verbunden, in der eine Vielzahl durch den Rotorwinkel ö parametrisierte Drehmomentazimutwinkelkurven abgelegt ist. Die Messeinrichtung ermöglicht durch Messung eines Rotorwinkels δ die Auswahl einer Drehmomentazimutwinkelkurve aus dem Speicher. Dazu sind die Messeinrichtung und der Speicher mit einer Datenverarbeitungseinheit verbunden.

Das oben beschriebene Verfahren zur Bestimmung des Wartungsazimutwinkels α_{w} wird bei der Variante für die Einhüllende durchgeführt, die in dem Fall mit der bestimmten Drehmomentazimutwinkelkurve zusammenfällt.

Dazu wird eine Umgebung U(α) gewählt, die wiederum die Windrichtungsschwankungen am Aufstellungsort der Windenergieanlage im Wesentlichen abdeckt, z.B. U(α)= ± 10°, und die Umgebung U(α) wird entlang der x-Achse in Fig. 4 kontinuierlich von α =0° bis α =360° verschoben. Für jede Position der Umgebung U(α) wird der Höchstwert des Drehmomentes der bestimmten Drehmomentazimutwlnkelkurve registriert. Nach dem Durchlauf der Umgebung U(α) über alle Azimutwinkel α werden die Höchstwerte verglichen und der minimale Höchstwert bestimmt und die dem minimalen Höchstwert zugeordnete Umgebung U(α_{w}) ausgewählt. Der genaue Mittelwert der Umgebung ist der Wartungsazimutwinkel α_{w} für den bestimmten Rotorwinkel δ.

Führt man dieses Verfahren für die Rotorposition 30° durch, so wird der Wartungsazimutwinkel bei etwa 280° bestimmt werden.
Die in Fig.4 gezeigten Kurven enthalten den Konuswinkel γ und Tiltwinkel β als (implizite) Parameter. Die Veränderung von Konuswinkel γ und Tiltwinkel β verändert die Kurven und damit den Wartungsazimutwlnkel α_{w}. Es können auch zusätzlich Kurven für verschiedene Konuswinkel γ und Tiltwinkel β bestimmt werden, für die dann ebenfalls ein Wartungsazimutwinkel bestimmt wird. Konuswinkel γ und Tiltwinkel β sind aber für eine aufgebaute Windenergieanlage genau wie die Blattverwindung nicht veränderbar und brauchen deshalb auch nicht gemessen zu werden.

## Patentansprüche

1. Verfahren zur Bestimmung eines Wartungsazimutwinkels (α_{w}) einer Windenergieanlage mit einem auf einem Turm (30) entlang eines Azimutwinkels (α) drehbaren Maschinenhaus (10) und einem am Maschinenhaus (10) entlang eines Rotorwinkels (δ) drehbaren Rotor (20), indem
eine Vielzahl von Kombinationen von Rotorwinkel (δ) und Azimutwinkel (α) eingestellt wird,
die an dem Rotor unter Einwirkung eines Windfeldes wirkenden Drehmomente für die eingestellten Kombinationen von Rotorwinkel (δ) und Azimutwinkel (α) ermittelt und dem zugehörigen Azimutwinkel (α) zugeordnet werden,
eine Drehmomenteinhüllende der Drehmoment-Azimutwinkelzuordnungen ermittelt wird,
Umgebungen (U(α)) mit vergleichbarer Sektorgröße der Azimutwinkel (α) gebildet werden und zugehörige Betragswerte der Drehmomenteinhüllenden bestimmt werden, eine Umgebung (U(α_{w})) mit betragsmäßig kleineren Drehmomenteinhüllendenwerten als die benachbarter Umgebungen ausgewählt wird und
der Wartungsazimutwinkel (α_{w}) innerhalb der ausgewählten Umgebung (U(α_{w})) bestimmt wird.

2. Verfahren nach Anspruch 1,
**dadurch gekennzeichnet, dass** innerhalb einer Vielzahl von Umgebungen (U(α)) jeweils der betragsmäßig größte Drehmomenteinhüllendenwert bestimmt wird,
die jeweils betragsmäßig größten Drehmomenteinhüllendenwerte miteinander verglichen werden und diejenige Umgebung (U(α_{w})) ausgewählt wird, deren derart bestimmter betragsmäßig größter Drehmomenteinhüllendenwert der kleinste der miteinander verglichenen betragsmäßig größten Drehmomenteinhüllendenwerte ist.

3. Verfahren nach Anspruch 1 oder 2,
**dadurch gekennzeichnet, dass** alle Umgebungen (U(α)) mit jeweils im Wesentlichen gleicher Sektorgröße gewählt werden, vorzugsweise mit einer Sektorgröße von etwa ±15°, besonders vorzugsweise ±8°, gewählt werden.

4. Verfahren nach wenigstens einem der vorstehenden Ansprüche,
**dadurch gekennzeichnet, dass** eine Vielzahl von Azimutwinkeln (α) vorgegeben wird und zunächst einer der Azimutwinkel (α) eingestellt und mit mehreren Rotorwinkeln (δ) kombiniert wird und dann weitere Azimutwinkel (α) eingestellt werden, die jeweils mit mehreren Rotorwinkeln (δ) kombiniert werden.

5. Verfahren nach wenigstens einem der vorstehenden Ansprüche,
**dadurch gekennzeichnet, dass** der mittlere Wert insbesondere mit einer Winkeltoleranz von ±10% der Sektorgröße der ausgewählten Umgebung (U(α_{w})) als Wartungsazimutwinkel (α_{w}) bestimmt wird.

6. Verfahren nach wenigstens einem der vorstehenden Ansprüche,
**dadurch gekennzeichnet, dass** der einem lokalen Minimum der Drehmomenteinhüllenden zugeordnete Azimutwinkel (α) der ausgewählten Umgebung (U(α_{w})) als Wartungsazimutwinkel (α_{w}) bestimmt wird.

7. Verfahren nach wenigstens einem der vorstehenden Ansprüche, **dadurch gekennzeichnet, dass** der Rotorwinkel (δ) zur Ermittlung eines Wartungsazimutwinkels (α_{w}) konstant gehalten wird, wobei für eine Vielzahl von konstanten Rotorwinkeln (δ) zugehörige Wartungsazimutwinkel (α_{w}) mit zugehörigen betragsmäßig größten Drehmomenteinhüllendenwerten bestimmt werden,
und die jeweils betragsmäßig größten Drehmomenteinhüllendenwerte miteinander verglichen werden und diejenige Kombination aus konstantem Rotorwinkel und Wartungsazimutwinkel (α_{w}) als Wartungsrotorwinkel und zugehörigem Wartungsazimutwinkel (α_{w}) ausgewählt wird, deren derart bestimmter betragsmäßig größter Drehmomenteinhüllendenwert der kleinste der miteinander verglichenen betragsmäßig größten Drehmomenteinhüllendenwerte ist.

8. Verfahren zur Wartung einer Windenergieanlage mit einem auf einem Turm (30) entlang eines Azimutwinkels (α) drehbaren Maschinenhaus (10) und einem am Maschinenhaus (10) entlang eines Rotorwinkels (δ) drehbaren Rotor (20), indem:
das Maschinenhaus (10) in einen durch ein Verfahren nach wenigstens einem der vorstehenden Ansprüche bestimmten Wartungsazimutwinkel (α_{w}) gedreht wird und das Maschinenhaus (10) mit arretiertem Rotor unter Beibehaltung des Wartungsazimutwinkels (α_{w}) gewartet wird,
wobei unter dem Wartungsazimutwinkel (α_{w}) die Winkelstellung des Maschinenhauses (10) relativ zur Windrichtung verstanden wird, in die das Maschinenhaus (10) zur Wartung des Rotors (20) oder des ihm nachfolgenden Antriebsstranges gedreht wird.

9. Verfahren nach Anspruch 8,
**dadurch gekennzeichnet, dass** der Rotor (20) vor der Arretierung in einen vorbestimmten Wartungsrotorwinkel (δ) gedreht wird.

10. Verfahren nach Anspruch 8 oder 9,
**dadurch gekennzeichnet, dass** in einem elektronischen Speicher unterschiedlichen Rotorwinkeln (δ) jeweils zugeordnete Wartungsazimutwinkel (α_{w}) abgelegt werden, mit einer mit einer Datenverarbeitungseinheit in Verbindung stehenden Messeinrichtung der Rotorwinkel (δ) gemessen wird,
durch die Datenverarbeitungseinheit dem gemessenen Rotorwinkel (δ) der zugehörige Wartungsazimutwinkel (α_{w}) zugeordnet wird und
eine Windnachführeinrichtung das Maschinenhaus in den zugehörigen Wartungsazimutwinkel (α_{w}) dreht.

11. Verfahren nach wenigstens einem der Ansprüche 8 bis 10,
**dadurch gekennzeichnet, dass** das Maschinenhaus (10) in einen Wartungsazimutwinkel (α_{w}) zwischen -180° bis -90° oder zwischen 90° bis 180° gedreht wird.

12. Verfahren nach Anspruch 11,
**dadurch gekennzeichnet, dass** das Maschinenhaus (10) in einen Wartungsazimutwinkel (α_{w}) zwischen
-170° und -100° oder zwischen 100° und 170°gedreht wird, günstigerweise in einen Wartungsazimutwinkel (α_{w}) von -135° oder +135° gedreht wird.

13. Verfahren nach wenigstens einem der Ansprüche 8 bis 12,
**dadurch gekennzeichnet, dass** ein in dem Maschinenhaus (10) angeordneter Triebstrang zumindest teilweise demontiert wird, eine Kommunikationsverbindung zwischen der Datenverarbeitungseinheit und einer Nabe des Rotors (20) unterbrochen wird und eine Hilfseinrichtung mit der Datenverarbeitungseinheit verbunden wird und damit die Kommunikationsverbindung zur Nabe des Rotors (20) simuliert wird.

14. Windenergieanlage zur Durchführung eines Verfahren nach wenigstens einem der Ansprüche 8 bis 13 mit einem auf einem Turm (30) entlang eines Azimutwinkels (α) drehbaren Maschinenhaus (10) und einem am Maschinenhaus (10) entlang eines Rotorwinkels (δ) drehbaren Rotor (20), **gekennzeichnet durch** einen elektronischen Speicher, in dem wenigstens ein Wartungsazimutwinkel (α_{w}) abgelegt ist und eine Windnachführeinrichtung, mit der das Maschinenhaus zur Wartung in einen der Wartungsazimutwinkel (α_{w}) drehbar ist.

15. Windenergieanlage nach Anspruch 14,
**dadurch gekennzeichnet, dass** in dem elektronischen Speicher Wartungsazimutwinkel (α_{w}) für unterschiedliche Rotorwinkel (δ) abgelegt sind
und **gekennzeichnet durch** eine Messeinrichtung des Rotorwinkels (δ), die mit einer Datenverarbeitungseinheit in Verbindung steht, wobei
in der Datenverarbeitungseinheit einem gemessenen Rotorwinkel (δ) ein zugehöriger Wartungsazimutwinkel (α_{w}) zuordenbar ist.

## Claims

1. Method for the determination of an azimuth angle for servicing purposes (α_{w}) of a wind power plant with a machinery housing (10) that can be rotated on a tower (30) along an azimuth angle (α) and a rotor (20) that can be rotated at a machinery housing (10) along a rotor angle (δ) such that
a plurality of combinations of rotor angle (δ) and azimuth angle (α) is adjusted,
that are determined at the rotor subject to the influence of a wind field, which is effecting torques,
for the adjusted combinations of rotor angle (δ) and azimuth angle (α) and are associated with the assigned azimuth angle (α),
a torque envelope of the torque-azimuth angle associations is determined,
surrounding areas (U(α)) with comparable sector size of the azimuth angles (α) are formed and associated magnitude values of the torque envelopes are determined, a surrounding area (U(α_{w})) with magnitude-wise smaller torque envelope values than the neighboring surrounding areas is selected and
the azimuth angle for servicing purposes (α_{w}) is determined within the selected surrounding area (U(α_{w})).

2. Method according to claim 1,
**characterized in that** within a plurality of surrounding areas (U(α)) respectively the magnitude-wise largest torque envelope value is determined,
the respectively magnitude-wise largest torque envelope values are compared with one another and
that the one surrounding area (U(a_{w})) is selected whose magnitude-wise largest torque envelope value determined by these means is the smallest of the magnitude-wise largest torque envelope values that were compared with one another.

3. Method according to claim 1 or 2,
**characterized in that** all surrounding areas (U(α)) with respectively essentially equal sector size are selected, preferably with a sector size of about ±15°, in particular preferably ±8°.

4. Method according to at least one of the prior claims,
**characterized in that** a plurality of azimuth angles (α) is prescribed and initially one of the azimuth angles (α) is adjusted and combined with several rotor angles (δ) and then additional azimuth angles (α) are adjusted that are respectively combined with several rotor angles (δ).

5. Method according to at least one of the prior claims,
**characterized in that** the average value is determined in particular with an angular tolerance of ±10% of the sector size of the selected surrounding area (U(α_{w})) as azimuth angle for servicing purposes (α_{w}).

6. Method according to at least one of the prior claims,
**characterized in that** the azimuth angle (α), of the selected surrounding area (U(α_{w})), that is associated with a local minimum of the torque envelope is determined as azimuth angle for servicing purposes (α_{w}).

7. Method according to at least one of the preceding claims, **characterized in that** the rotor angle (δ) for the determination of an azimuth angle for servicing purposes (α_{w}) is held constant, wherein for a plurality of constant rotor angles (δ) associated azimuth angles for servicing purposes (α_{w}) with associated magnitude-wise largest torque envelope values are determined,
and the respectively magnitude-wise largest torque envelope values are compared with one another and the one combination of constant rotor angle and azimuth angle for servicing purposes (α_{w}) is selected as rotor angle for servicing purposes and associated azimuth angle for servicing purposes (α_{w}), whose by these means determined magnitude-wise largest torque envelope value is the smallest of the magnitude-wise largest torque envelope values that were compared with one another.

8. Method for the servicing of a wind power plant with a machinery housing (10) that is rotatable on a tower (30) along an azimuth angle (α) and a rotor (20) that is rotatable at the machinery housing along a rotor angle (δ) such that:
the machinery housing (10) is rotated into an azimuth angle for servicing purposes (α_{w}) determined in particular by means of a method according to at least one of the previous claims and the machinery housing (10) is maintained with locked rotor while retaining the azimuth angle for servicing purposes (α_{w}).

9. Method according to claim 8,
**characterized in that** the rotor (20) prior to locking is rotated into a predetermined rotor angle for servicing purposes (δ).

10. Method according to claim 8 or 9,
**characterized in that** in an electronic memory are stored azimuth angles for servicing purposes (α_{w}) that are respectively associated with different rotor angles (δ), the rotor angle (δ) is measured with a measurement installation that is connected with a data processing unit,
by means of the data processing unit the measured rotor angle (δ) is associated with the assigned azimuth angle for servicing purposes (α_{w}) and a wind tracking installation rotates the machinery housing into the associated azimuth angle for servicing purposes (α_{w}).

11. Method according to at least one of the claims 8 to 10,
**characterized in that** the machinery housing (10) is rotated
into an azimuth angle for servicing purposes (α_{w}) between -180° to -90° or between 90° to 180°.

12. Method according to claim 11,
**characterized in that** the machinery housing (10) is rotated
into an azimuth angle for servicing purposes (α_{w}) between
-170° and -100° or between 100° and 170°, optimally into a an azimuth angle for servicing purposes (α_{w}) of -135° or +135°.

13. Method according to at least one of the claims 8 to 12,
**characterized in that** a drive train that is disposed in the machinery housing (10) is at least partially disassembled, a communication connection between the data processing unit and a hub of the rotor (20) is interrupted and an auxiliary installation is connected with the data processing unit, and the communication connection to the hub of the rotor (20) is thereby simulated.

14. Wind power plant for the implementation of a method according to at least one of the claims 8 to 13 with a machinery housing (10) that can be rotated on a tower (30) along an azimuth angle (α) and a rotor (20) that can be rotated at a machinery housing (10) along a rotor angle (δ), **characterized by** means of an electronic memory in which at least one azimuth angle for servicing purposes is stored (α_{w}) and
a wind tracking installation with which the machinery housing can be rotated into one of the azimuth angles for servicing purposes (α_{w}).

15. Wind power plant according to claim 14,
**characterized in that** in the electronic memory azimuth angles for servicing purposes (α_{w}) for different rotor angles (δ) are stored,
and **characterized by** a measurement installation of the rotor angle (δ), which is connected with a data processing unit,
whereby in the data processing unit a measured rotor angle (δ) can be associated with an assigned azimuth angle for servicing purposes (α_{w}).

## Revendications

1. Procédé pour déterminer un angle d'azimut de maintenance (α_{w}) d'une installation d'énergie éolienne avec un bâtiment des machines (10) rotatif sur une tour (30) le long d'un angle d'azimut (α) et avec un rotor (20) rotatif au bâtiment des machines (10) le long d'un angle de rotor (∂),
cependant qu'une multitude de combinaisons d'angle de rotor (∂) et d'angle d'azimut (α) est réglée,
les couples de rotation qui agissent sur le rotor sous l'effet d'un champ de vent sont déterminés pour les combinaisons d'angle de rotor (∂) et d'angle d'azimut (α) réglées et sont affectés à l'angle d'azimut (α) correspondant,
une enveloppante de couple de rotation des affectations d'angle d'azimut de couple de rotation est déterminée,
des environnements (U((α)) sont formés avec une grandeur de secteur comparable des angles d'azimut (α) et des valeurs correspondantes des enveloppantes de couple de rotation sont déterminées,
un environnement (U((α_{w})) avec des valeurs d'enveloppante de couple de rotation de valeur inférieure à celles des environnements voisins est sélectionné et
l'angle d'azimut de maintenance (α_{w}) est déterminé à l'intérieur de l'environnement sélectionné (U((α_{w})).

2. Procédé selon la revendication 1,
**caractérisé en ce qu'**à l'intérieur d'une multitude d'environnements (U((α_{w})) la valeur d'enveloppante de couple de rotation de la plus grande valeur est respectivement déterminée,
les valeurs d'enveloppante de couple de rotation respectivement de la plus grande valeur sont comparées l'une à l'autre et on sélectionne l'environnement (U((α_{w})) dont la valeur d'enveloppante de couple de rotation de la plus grande valeur ainsi déterminée est la plus petite des valeurs d'enveloppante de couple de rotation de la plus grande valeur comparées l'une à l'autre.

3. Procédé selon la revendication 1 ou 2,
**caractérisé en ce que** tous les environnements (U((α)) avec respectivement sensiblement la même grandeur de secteur sont sélectionnés, de préférence avec une grandeur de secteur d'environ ±15°, de manière particulièrement préférée de ±8°.

4. Procédé selon au moins l'une des revendications précédentes,
**caractérisé en ce qu'**une multitude d'angles d'azimut (α) est prédéterminée et tout d'abord l'un des angles d'azimut (α) est réglé et combiné à plusieurs angles de rotor (∂) et ensuite d'autres angles d'azimut (α) sont réglés qui sont respectivement combinés à plusieurs angles de rotor (∂).

5. Procédé selon au moins l'une des revendications précédentes,
**caractérisé en ce que** la valeur moyenne est déterminée en particulier avec une tolérance angulaire de ±10% de la grandeur de secteur de l'environnement sélectionné (U((α_{w})) comme angle d'azimut de maintenance (α_{w}).

6. Procédé selon au moins l'une des revendications précédentes,
**caractérisé en ce que** l'angle d'azimut (α) affecté à un minimum local de l'enveloppante de couple de rotation de l'environnement sélectionné (U((α_{w})) est déterminé comme angle d'azimut de maintenance (α_{w}).

7. Procédé selon au moins l'une des revendications précédentes,
**caractérisé en ce que** l'angle de rotor (∂) est maintenu constant pour déterminer un angle d'azimut de maintenance (α_{w}), cependant que des angles d'azimut de maintenance correspondants (α_{w}) avec des valeurs d'enveloppante de couple de rotation correspondantes de la plus grande valeur sont déterminés pour une multitude d'angles de rotor (∂) constants
et les valeurs d'enveloppante de couple de rotation respectivement de la plus grande valeur sont comparées l'une à l'autre et la combinaison d'angle de rotor constant et d'angle d'azimut de maintenance (α_{w}) dont la valeur d'enveloppante de couple de rotation de la plus grande valeur ainsi déterminée est la plus petite des valeurs d'enveloppante de couple de rotation de la plus grande valeur comparées l'une à l'autre est sélectionnée comme angle de rotor de maintenance et angle d'azimut de maintenance correspondant (α_{w}).

8. Procédé pour la maintenance d'une installation d'énergie éolienne avec un bâtiment des machines (10) rotatif sur une tour (30) le long d'un angle d'azimut (∂) et avec un rotor (20) rotatif au bâtiment des machines (10) le long d'un angle de rotor (∂) cependant que le bâtiment des machines (10) est mis en rotation dans un angle d'azimut de maintenance (α_{w}) déterminé notamment par un procédé selon au moins l'une des revendications précédentes et le bâtiment des machines (10) est entretenu avec le rotor arrêté en maintenant l'angle d'azimut de maintenance (α_{w}).

9. Procédé selon la revendication 8,
**caractérisé en ce que** le rotor (20) est en rotation avant l'arrêt dans un angle de rotor de maintenance (∂) prédéterminé.

10. Procédé selon la revendication 8 ou 9,
**caractérisé en ce que** des angles d'azimut de maintenance (α_{w}) respectivement affectés à différents angles de rotor (∂) sont stockés en mémoire dans une mémoire électronique,
l'angle de rotor (∂) est mesuré avec un dispositif de mesure en relation avec une unité de traitement des données,
l'angle d'azimut de maintenance (α_{w}) correspondant est affecté à l'angle de rotor mesuré (∂) par l'unité de traitement des données et
un dispositif d'ajustement à la direction du vent met en rotation le bâtiment des machines dans l'angle d'azimut de maintenance (a_{w}) correspondant.

11. Procédé selon au moins l'une des revendications 8 à 10,
**caractérisé en ce que** le bâtiment des machines (10) est mis en rotation dans un angle d'azimut de maintenance (α_{w}) entre -180° et -90° ou entre 90° et 180°.

12. Procédé selon la revendication 11,
**caractérisé en ce que** le bâtiment des machines (10) est mis en rotation dans un angle d'azimut de maintenance (α_{w}) entre -170° et -100° ou entre 100° et 170°, de manière plus favorable dans un angle d'azimut de maintenance (α_{w}) de-135° ou +135°.

13. Procédé selon au moins l'une des revendications 8 à 12,
**caractérisé en ce qu'**un tronçon d'entraînement placé dans le bâtiment des machines (10) est au moins partiellement démonté, une liaison de communication entre l'unité de traitement des données et un moyeu du rotor (20) est interrompue et un dispositif auxiliaire est relié à l'unité de traitement des données et la liaison de communication vers le moyeu du rotor (20) est ainsi simulée.

14. Installation d'énergie éolienne pour exécuter un procédé selon au moins l'une des revendications 8 à 13 avec un bâtiment des machines (10) rotatif sur une tour (30) le long d'un angle d'azimut (α) et un rotor (20) rotatif au bâtiment des machines (10) le long d'un angle de rotor (∂), **caractérisée par** une mémoire électronique dans laquelle au moins un angle d'azimut de maintenance (α_{w}) est stocké en mémoire et par un dispositif d'ajustement à la direction du vent avec lequel le bâtiment des machines est rotatif dans l'un des angles d'azimut de maintenance (α_{w}) pour la maintenance.

15. Installation d'énergie éolienne selon la revendication 14,
**caractérisée en ce que** des angles d'azimut de maintenance (α_{w}) pour différents angles de rotor (∂) sont stockés en mémoire dans la mémoire électronique
et **caractérisée par** un dispositif de mesure de l'angle de rotor (∂) qui est en relation avec une unité de traitement des données, cependant qu'un angle d'azimut de maintenance correspondant (α_{w}) pouvant être affecté à un angle de rotor mesuré (∂) dans l'unité de traitement des données.
